# EUROPEAN PATENT APPLICATION

(11) **EP 4 285 751 A1**
(43) Date of publication of application: **06.12.2023**
(21) Application number: 22745127.5
(22) Date of filing: 20.01.2022
(51) Int. Cl.: A24F 40/40, A24F 40/46

(54) **ELECTRONIC ATOMIZATION DEVICE**

(30) Priority: 28.01.2021 CN 202110118808
(71) Applicant: Shenzhen First Union Technology Co., Ltd., Shenzhen, Guangdong 518000 (CN)
(72) Inventor: YANG, Jing, Shenzhen, Guangdong 518000 (CN); XU, Zhongli, Shenzhen, Guangdong 518000 (CN); LI, Yonghai, Shenzhen, Guangdong 518000 (CN)
(74) Representative: Proi World Intellectual Property GmbH
(86) International application number: PCT/CN2022/073023
(87) International publication number: WO 2022/161252

(57) **Abstract**

Disclosed in this application is an electronic vaporization device, including: a battery, a storage unit and a heating element; a thermistor, provided close to the heating element, heat of the heating element being able to be transferred to the thermistor, resulting in a change in a resistance value of the thermistor, and the thermistor being electrically connected with the heating element and the battery to form an electrical circuit; and a control module, configured to acquire a starting signal to conduct electrical connection of the electrical circuit, the electrical circuit being configured in such a way that during conduction, the change in the resistance value of the thermistor reduces a current flowing through the heating element. According to this application, the resistance value of the thermistor is changed by sensing the temperature of the heating element, and when a user inhales an aerosol, the current flowing through the heating element can be reduced along with the change in the resistance value of the thermistor; and thus, in a case that the inhalation frequency is relatively high or the continuous power output time is too long, the temperature of the heating element can be limited within a relatively low range to achieve a heat protection function.

## Description

### CROSS-REFERENCE TO RELATED APPLICATIONS

This application claims the priority of the prior application No. 202110118808X filed to the China National Intellectual Property Administration on January 28, 2021 and entitled "electronic vaporization device", the content of which is incorporated herein by reference.

### TECHNICAL FIELD

This application relates to the technical field of cigarette devices, and in particular, to an electronic vaporization device.

### BACKGROUND

An electronic vaporization device is an electronic product that generates smoke by heating e-liquid for a user to inhale, and generally has two parts of a vaporizer and a battery pack. The vaporizer stores the e-liquid inside and is provided with a vaporization core for heating the e-liquid. The battery pack can supply power to the vaporization core to emit heat and generate high temperature to heat the e-liquid.

An existing electronic vaporization device has the problem that when the inhalation frequency is relatively high or the continuous power output time is too long, the temperature of the vaporization core is prone to being too high. As a result, part of the e-liquid is charred at a high temperature, and the smoke is blackened, which reduce the inhalation experience of the user.

### SUMMARY

The main objective of this application is to provide an electronic vaporization device, to solve a problem of an existing electronic vaporization device existing when the inhalation frequency is relatively high or the continuous power output time is too long.

In order to solve the problem, provided in this application is an electronic vaporization device, including a battery, a storage unit used for storing liquid, and a heating element used for heating the liquid; and
further including
a thermistor, provided close to the heating element, heat of the heating element being able to be transferred to the thermistor, resulting in a change in a resistance value of the thermistor, and the thermistor being electrically connected with the heating element and the battery to form an electrical circuit; and
a control module, configured to acquire a starting signal to conduct electrical connection of the electrical circuit,
the electrical circuit being configured in such a way that during conduction, the change in the resistance value of the thermistor reduces a current flowing through the heating element.

According to the electronic vaporization device provided by this application, the resistance value of the thermistor is changed by sensing the temperature of the heating element, and when a user inhales an aerosol, the current flowing through the heating element can be reduced along with the change in the resistance value of the thermistor; and thus, in a case that the inhalation frequency is relatively high or the continuous power output time is too long, the temperature of the heating element can be limited within a relatively low range to achieve a heat protection function.

### BRIEF DESCRIPTION OF THE DRAWINGS

The objective implementation, functional features and advantages of this application are further illustrated in conjunction with embodiments and with reference to accompanying drawings. One or more embodiments are exemplarily illustrated through the corresponding figures in the accompanying drawings, and the exemplary illustrations are not to be construed as limiting the embodiments. Elements in the accompanying drawings that have same reference numerals are represented as similar elements, and unless otherwise particularly stated, the figures in the accompanying drawings are not drawn to scale.
FIG. 1 is a schematic diagram of an electronic vaporization device provided by an embodiment of this application.
FIG. 2 is a schematic cross-sectional view of the electronic vaporization device provided by an embodiment of this application.
FIG. 3 is a schematic diagram of a vaporization assembly provided by an embodiment of this application.
FIG. 4 is a schematic exploded view of the vaporization assembly provided by an embodiment of this application.
FIG. 5 is a schematic cross-sectional view of the vaporization assembly provided by an embodiment of this application.
FIG. 6 is a schematic diagram of a heating assembly provided by an embodiment of this application.
FIG. 7 is a schematic diagram of a holder provided by an embodiment of this application.
FIG. 8 is a schematic diagram from another perspective of the holder provided by an embodiment of this application.
FIG. 9 is a schematic diagram of a base body provided by an embodiment of this application.
FIG. 10 is a schematic diagram of a control module provided by an embodiment of this application.
FIG. 11 is a schematic diagram of a circuit principle provided by an embodiment of this application.

### DETAILED DESCRIPTION

It is to be understood that specific embodiments described herein are merely used to explain this application but are not intended to limit this application. For ease of understanding of this application, this application is illustrated below in more detail in conjunction with accompanying drawings and specific implementations. When an element is expressed as "being fixed to" another element, the element may be directly on the another element, or one or more intermediate elements may exist between the element and the another element. When one element is expressed as "being connected to" another element, the element may be directly connected to the another element, or one or more intermediate elements may exist between the element and the another element. Terms "upper", "lower", "left", "right", "inner", "outer", and similar expressions used in this description are merely used for an illustrative purpose.

Unless otherwise defined, meanings of all technical and scientific terms used in this description are the same as that usually understood by a person skilled in the art to which this application belongs. The terms used in this description of this application are merely intended to describe objectives of the specific implementations and are not intended to limit this application. A term "and/or" used in this description includes any or all combinations of one or more related listed items.

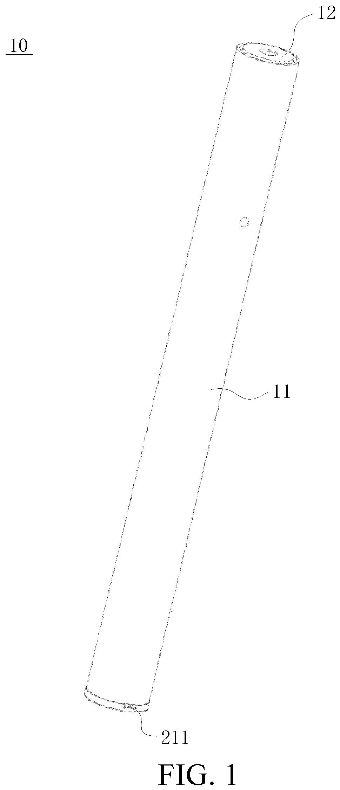

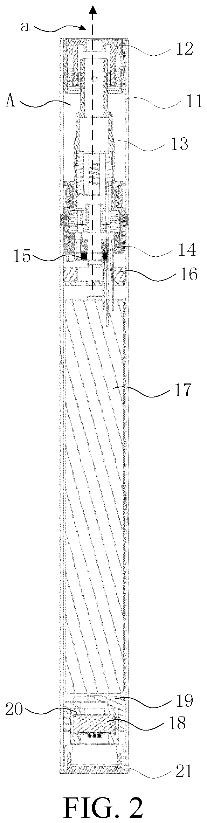

As shown in FIG. 1 and FIG. 2, an electronic vaporization device 10 includes a shell 11, a suction nozzle assembly 12, a vaporization assembly 13, a holder 14, a base body 15, a separator 16, a battery 17, a control module 18, a fixing seat 19, a sealing piece 20 and a pedestal 21.

The shell 11 is cylindrical and hollow inside. The shell 11 is provided with an upper open end and a lower open end. One end of the suction nozzle assembly 12 can be fixed to the upper open end, and one end of the pedestal 21 can be fixed to the lower open end, thus forming an accommodating space. The suction nozzle assembly 12, the vaporization assembly 13, the holder 14, the base body 15, the separator 16, the battery 17, the control module 18, the fixing seat 19, the sealing piece 20 and other components are all provided in the accommodating space.

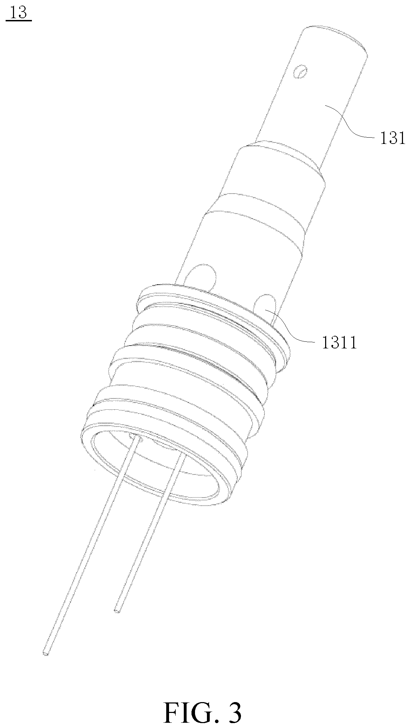

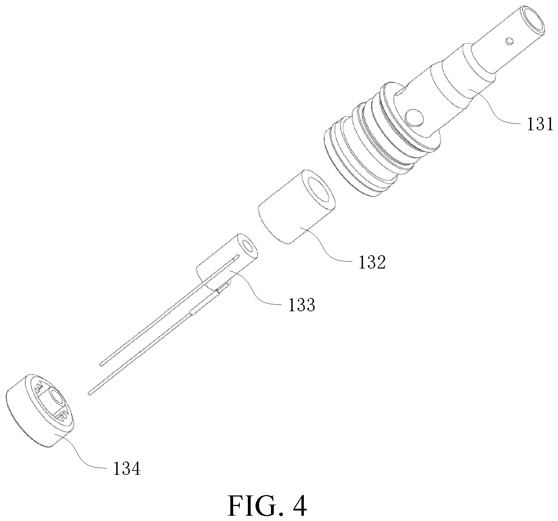

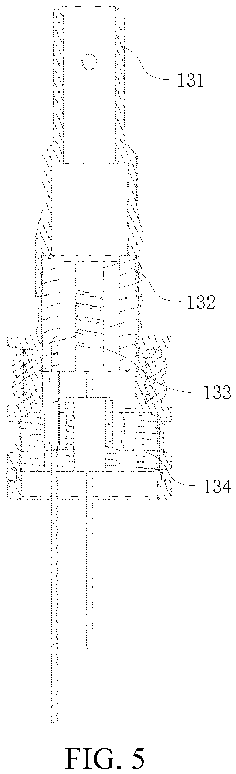

In conjunction with FIG. 3 to FIG. 6 for understanding, the vaporization assembly 13 includes a base 131, a liquid guiding piece 132, a heating assembly 133 and a leakproof piece 134.

Both the liquid guiding piece 132 and the heating assembly 133 are held on the base 131. Specifically, the base 131 is roughly tubular, with the upper end being connected with the suction nozzle assembly 12. The base 131 is provided with an extending part (not shown in the figures) extending towards an inner surface of the shell 11. The extending part abuts against the inner surface of the shell 11, such that a storage unit A used for storing liquid is defined among an outer surface of the base 131, the inner surface of the shell 11 and the suction nozzle assembly 12. The vaporization assembly 13 further includes a sealing piece (not shown in the figures). The sealing piece sleeves the outer surface of the base 131 and is located below the storage unit A. The sealing piece is used for sealing a gap between the outer surface of the base 131 and the inner surface of the shell 11 to stop the liquid from flowing down.

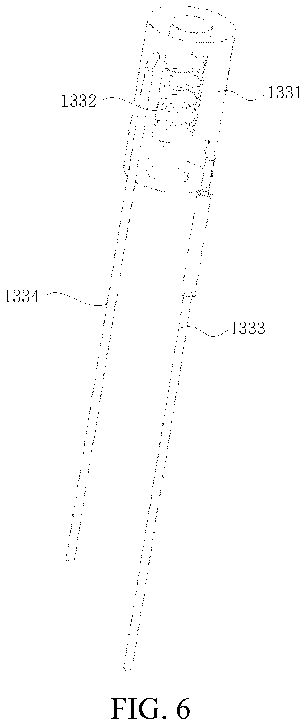

The liquid guiding piece 132 and the heating assembly 133 are each tubular. The liquid guiding piece 132 wraps a periphery of the heating assembly 133. The liquid guiding piece 132 and the heating assembly are provided in the base 131 together. A plurality of liquid inlets 1311 are provided in a tube wall of the base 131. The heating assembly 133 and the storage unit A are in fluid communication through the liquid inlets 1311. As shown in FIG. 6, the heating assembly 133 includes a porous base body 1331, a heating element 1332, an electric wire 1333 and an electric wire 1334. The heating element 1332 is provided on an inner surface of the porous base body 1331 or embedded in the porous base body 1331. The electric wire 1333 and the electric wire 1334 are connected with the heating element 1332, respectively, and coupled with the battery 17.

The leakproof piece 134 is also held on the base 131. Specifically, the leakproof piece 134 is provided in the base 131 and located below the liquid guiding piece 132 and the heating assembly 133. The leakproof piece 134 is provided with an inner tube, an outer tube and an extending part (not shown in the figure) extending from an outer surface of the inner tube to an inner surface of the outer tube. The extending part is sunken downwards to form a collection cavity for collecting the liquid and preventing the liquid from flowing into the holder 14.

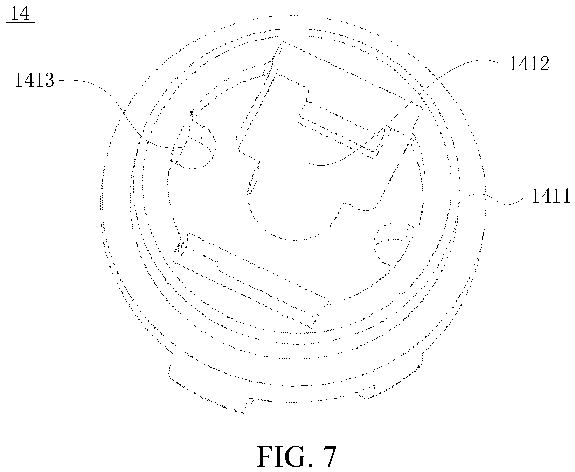

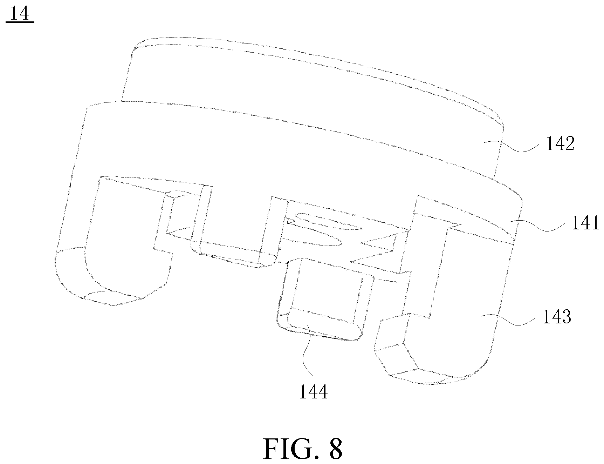

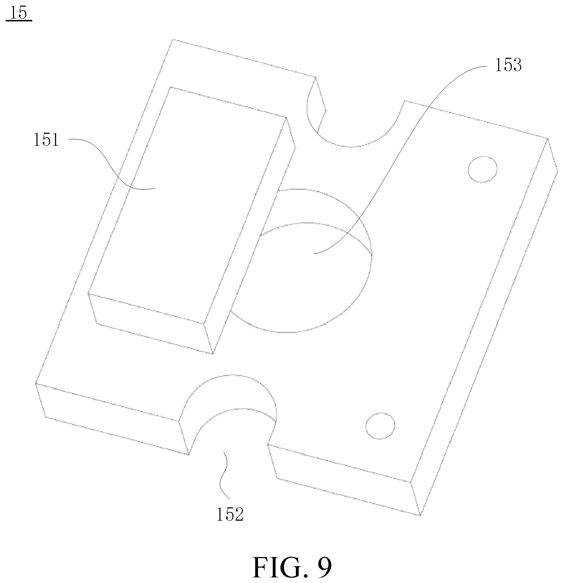

In conjunction with FIG. 7 to FIG. 9 for understanding, the holder 14 includes a body 141, an inserting art 142, a limiting part 143 and a limiting part 144.

The body 141 is provided with a first end and a second end opposite to the first end. Part of an end face of the first end extends towards the base 131 to form the inserting part 142. The diameter of the inserting part 142 is less than the diameter of the body 141, such that the other part of the end face of the first end forms a stepped face 1411. The inserting part 142 can be inserted into the base 131. After inserting, the stepped face 1411 abuts against the end portion of the base 131, and the leakproof piece 134 is located above the inserting part 142. In this way, through contact between the holder 14 and the base 131, heat of the heating element 1332 can be transferred to the thermistor 151 through the base 131 and the holder 14.

The base body 15 is provided between the heating element 1332 and the control module 18. The base body 15 includes, but is not limited to, a circuit board, a fixing plate, etc. Preferably, the circuit board is adopted, by arranging the thermistor 151 on the circuit board, on the one hand, electrical connection is facilitated, and on the other hand, it is convenient to provide the thermistor 151 close to the heating element 1332. The base body 15 is provided with a first face and a second face opposite to the first face. The thermistor 151 is provided on the first face. When the base body 15 is held on the second end of the body 141, the first face is provided facing the body 141, i.e. provided facing the vaporization assembly 13 or the heating element 1332. The limiting part 143 and the limiting part 144 are used for limiting the base body 15 to move to hold the base body 15 on the second end. The limiting part 144 is formed by extending from the second end of the body 141 in a direction away from body 141. The limiting part 143 differs from the limiting part 144 in that the limiting part 143 is provided with an axially extending protruding portion. In this way, when the base body 15 is held on the second end of the body 141, the limiting part 144 can limit the base body 15 to axially move, and the limiting part 143 can limit the base body 15 to axially and longitudinally move.

The battery 17 is provided below the vaporization assembly 13 and used for providing power for the electronic vaporization device 10. In the example, the battery 17 is a non-rechargeable battery. The separator 16 is provided between the vaporization assembly 13 and the battery 17. The separator 16 can separate the vaporization assembly 13 from the battery 17 and stop the liquid from flowing into the battery 17.

The fixing seat 19 is located below the battery 17. The fixing seat 19 is used for fixing the control module 18. The sealing piece 20 is provided between the control module 18 and the fixing seat 19 for sealing. The control module 18 is used for acquiring a starting signal and then controlling the heating element 1332 to heat the liquid to generate an aerosol for a user to inhale.

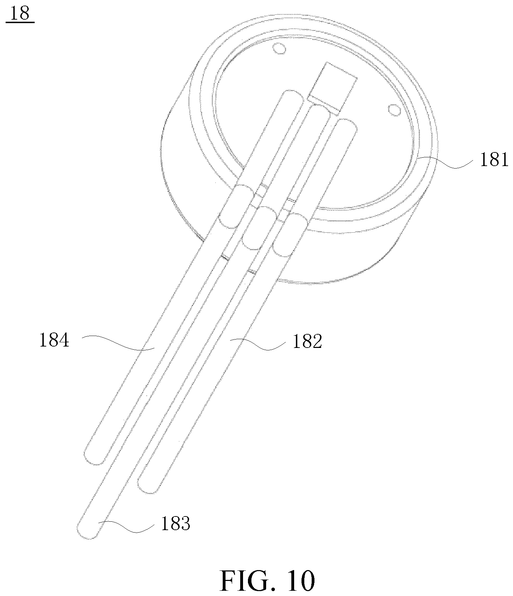

In the example, the control module 18 includes an airflow sensor and a control chip and is integrally formed by the airflow sensor and the control chip. As shown in FIG. 10, reference can be made to 181 in the figure for the structure integrally formed by the airflow sensor and the control chip, the control module 18 is further provided with a first electrical connection terminal 182, an output terminal 183 and a second electrical connection terminal 184. An ASIC design adopted by the control chip can avoid a crash phenomenon in a current MCU scheme.

An air inlet hole 211 is provided in the pedestal 21. An airflow can flow therein through the air inlet hole 211, and can be sensed by an airflow sensor in the control module 18 when passing through the control module 18, and then the heating element 1332 is controlled through the control chip. Referring to FIG. 2, and FIG. 7 to FIG. 9 again, the airflow passes through the control module 18 and the battery 17, then passes through the separator 16, the base body 15, the holder 14 and the vaporization assembly 13 in sequence, and flows out from the suction nozzle assembly 12 to the mouth of the user for inhaling. In the figure, a refers to an airflow channel flowing through the separator 16, the base body 15, the holder 14, the vaporization assembly 13 and the suction nozzle assembly 12. An airflow hole 1412 of the holder 14 and an airflow hole 153 of the base body 15 form part of the airflow channel.

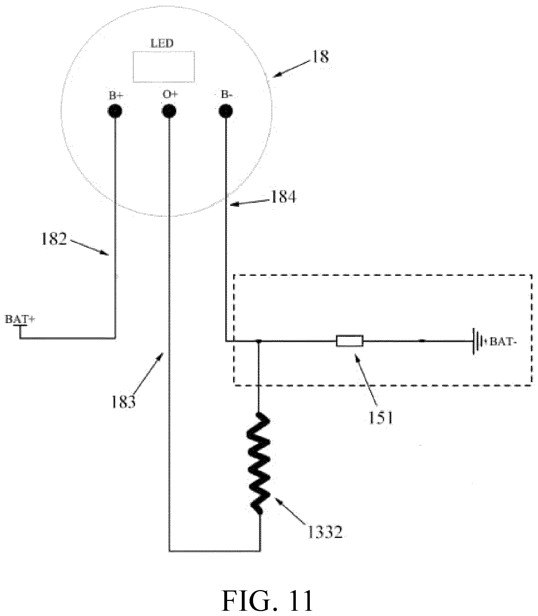

The thermistor 151, the heating element 1332 and the battery 17 are electrically connected to form an electrical circuit. As shown in FIG. 11, in the example, the first electrical connection terminal 182 of the control module 18 is electrically connected with a positive electrode of the battery 17. The output terminal 183 of the control module 18 is electrically connected with one end of the heating element 1332. The other end of the heating element 1332 is electrically connected with the second electrical connection terminal 184 of the control module 18 and one end of the thermistor 151. The other end of the thermistor 151 is electrically connected with a negative electrode of the battery 17. Referring to FIG. 2, and FIG. 7 to FIG. 9 again, the holder 14 is provided with an electric wire hole 1413. The base body 15 is provided with an electric wire hole 152 for a supply wire to pass through, thus forming electrical connection.

A positive temperature coefficient thermistor is adopted as the thermistor 151. As can be seen from FIG. 2, the holder 14 holding the base body 15 abuts against the base 131. In this way, the thermistor 151 is provided close to the heating element 1332, and the heat generated by heating of the heating element 1332 can be transferred to the thermistor 151, resulting in a change in a resistance value of the thermistor 151. Conduction or radiation can serve as a transfer mode.

Further, as can be seen from the foregoing description, since there is a certain distance between the heating assembly 133 and the lower end of the base 131, and the holder 14 abuts against the lower end of the base 131 (or since the leakproof piece 134 is provided between the holder 14 and the heating assembly 133), part of the base 131 and/or the leakproof piece 134 forms a spacer, thus maintaining a preset distance between the thermistor 151 and the heating element 1332. Specifically, the distance between the thermistor 151 and the heating element 1332 is about between 8 mm and 12 mm, preferably, 10 mm. In this way, by maintaining the preset distance between the thermistor 151 and the heating element 1332, the thermistor 151 can obtain a relatively suitable amount of heat, resulting in the change in the resistance value of the thermistor 151 and achieving a heat protection function.

Further, in order to improve transfer efficiency, the body 141 of the holder 14 is provided with a through hole (referring to the airflow hole 1412 in the figure, the through hole communicating with the airflow hole 1412), the heat generated by heating of the heating element 1332 can be transferred to the thermistor 151 through the through hole.

Referring to FIG. 11 again, when the user inhales and after the control module 18 senses an airflow change (i.e. acquiring the starting signal), B+ and O+ terminals of the control module 18 form a path, a current flows out from the positive electrode of the battery 17, passes through the first electrical connection terminal 182, the second electrical connection terminal 184, the heating element 1332 and the thermistor 151, and flows into the negative electrode of the battery 17. The starting signal is not limited to the change in the inhalation airflow, and for example, can be a switch control signal, etc.

The thermistor 151 has a zero power room temperature resistance value of between 50 milliohms and 150 milliohms; or between 50 milliohms and 120 milliohms; or between 50 milliohms and 100 milliohms; or between 50 milliohms and 80 milliohms; or between 60 milliohms and 80 milliohms. When the user normally inhales, the heating element 1332 has a resistance value of between 0.8 ohms and 2 ohms. Therefore, the thermistor 151 generates a relatively small amount of heat and has a relatively small loss, and also has a relatively small impact on the heating element 1332. At this time, both the heat transferred from the heating element 1332 to the thermistor 151 and the heat generated by the thermistor 151 itself are relatively small, and cannot trigger the heat protection function.

When the inhalation frequency becomes high or the continuous power output time is too long due to an abnormal condition, the temperature of the heating element 1332 rises sharply, and the heat transferred from the heating element 1332 to the thermistor 151 and the heat generated by the thermistor 151 itself are increased quickly. As a result, the resistance value of the thermistor 151 will be increased as the temperature of the heating element 1332 rises. Thus, a total resistance value of the electrical circuit is increased. After the total resistance value is increased, the current in the electrical circuit is decreased. That is, the current flowing through the heating element 1332 will be decreased. Thus, the temperature of the heating element 1332 can be limited within a relatively low range to achieve the heat protection function. Alternatively, the resistance value of the thermistor 151 is increased, and a voltage drop between the two ends of the thermistor 151 will be increased. As a result, a power supply voltage of the control module 18 is decreased, which makes the control module 18 unable to operate, resulting in a decrease in the current in the electrical circuit and achieving the heat protection function.

The foregoing examples are all illustrated with the thermistor 151 being the positive temperature coefficient thermistor. In other examples, the thermistor 151 can be the negative temperature coefficient thermistor, and electrical connection relationship between the thermistor 151 and the heating element 1332 is that the thermistor 151 and the heating element 1332 are connected in parallel (reference can be made to FIG. 11 for understanding). In the example, the negative temperature coefficient thermistor has the zero power room temperature resistance value of between 5 milliohms and 25 milliohms; or between 7 milliohms and 25 milliohms; or between 8 milliohms and 25 milliohms; or between 10 milliohms and 25 milliohms; or between 12 milliohms and 20 milliohms.

Preferred embodiments of this application are given in the description of this application and the accompanying drawings thereof. However, this application may be implemented in various different forms, and is not limited to the embodiments described in this description. These embodiments are not intended to be an additional limitation on the content of this application, and are described for the purpose of providing a more thorough and comprehensive understanding of the content disclosed in this application. Moreover, the foregoing technical features are further combined with each other to form various embodiments not listed above, and all such embodiments shall be construed as falling within the scope of the description of this application. Further, a person of ordinary skill in the art may make improvements or modifications according to the foregoing illustrations, and all the improvements and modifications shall fall within the protection scope of the appended claims of this application.

## Claims

1. An electronic vaporization device, comprising a battery, a storage unit used for storing liquid, and a heating element used for heating the liquid; and
further comprising
a thermistor, provided close to the heating element, heat of the heating element being able to be transferred to the thermistor, resulting in a change in a resistance value of the thermistor, and the thermistor being electrically connected with the heating element and the battery to form an electrical circuit; and
a control module, configured to acquire a starting signal to conduct electrical connection of the electrical circuit,
the electrical circuit being configured in such a way that during conduction, the change in the resistance value of the thermistor reduces a current flowing through the heating element.

2. The electronic vaporization device according to claim 1, wherein the thermistor is a positive temperature coefficient thermistor, and the positive temperature coefficient thermistor is connected with the heating element in series; or the thermistor is a negative temperature coefficient thermistor, and the negative temperature coefficient thermistor is connected with the heating element in parallel.

3. The electronic vaporization device according to claim 2, wherein the control module is provided with a first electrical connection terminal, a second electrical connection terminal and an output terminal; and
the first electrical connection terminal is electrically connected with a positive electrode of the battery, the output terminal is electrically connected with one end of the heating element, an other end of the heating element is electrically connected with the second electrical connection terminal and one end of the thermistor, and an other end of the thermistor is electrically connected with a negative electrode of the battery.

4. The electronic vaporization device according to claim 2 or 3, wherein the positive temperature coefficient thermistor has a zero power room temperature resistance value of between 50 milliohms and 150 milliohms; or between 50 milliohms and 120 milliohms; or between 50 milliohms and 100 milliohms; or between 50 milliohms and 80 milliohms; or between 60 milliohms and 80 milliohms.

5. The electronic vaporization device according to claim 2, wherein the negative temperature coefficient thermistor has a zero power room temperature resistance value of between 5 milliohms and 25 milliohms; or between 7 milliohms and 25 milliohms; or between 8 milliohms and 25 milliohms; or between 10 milliohms and 25 milliohms; or between 12 milliohms and 20 milliohms.

6. The electronic vaporization device according to any of claims 1 to 5, further comprising a spacer, configured to maintain a preset distance between the thermistor and the heating element.

7. The electronic vaporization device according to any of claims 1 to 6, further comprising a base body, the thermistor being provided on the base body.

8. The electronic vaporization device according to claim 7, wherein the base body is provided with a first face and a second face opposite to the first face; and the thermistor is provided on the first face, and the first face is provided facing the heating element.

9. The electronic vaporization device according to claim 7, wherein the control module comprises an airflow sensor and a control chip, and the base body is provided between the heating element and the control module.

10. The electronic vaporization device according to claim 9, wherein the base body is provided with an airflow hole to make an airflow flow through the airflow hole.

11. The electronic vaporization device according to any of claims 7 to 10, further comprising a holder, the base body being held on the holder.

12. The electronic vaporization device according to claim 11, wherein the holder comprises a body and has a first end and a second end opposite to the first end; and
the first end is provided close to the heating element, and the base body is held on the second end.

13. The electronic vaporization device according to claim 12, wherein the body is provided with a through hole to enable the heat of the heating element to be transferred to the thermistor through the through hole.

14. The electronic vaporization device according to claim 12, wherein the holder further comprises a limiting part provided on the second end; and the limiting part is used for limiting the base body to move to hold the base body on the second end.

15. The electronic vaporization device according to any of claims 11 to 14, further comprising a base used for holding the heating element; and the holder is in contact with the base to enable the heat of the heating element to be transferred to the thermistor through the base and the holder.

16. The electronic vaporization device according to claim 15, wherein the base is cylindrical, the first end of the holder is provided with a stepped face, and the stepped face abuts against an end of the base.

17. The electronic vaporization device according to claim 16, further comprising a leakproof piece used for preventing the liquid from flowing to the holder; and
both the leakproof piece and the heating element are provided in the base, and the leakproof piece is provided between the heating element and the holder.
